# EUROPEAN PATENT APPLICATION

(11) **EP 2 918 489 A1**
(43) Date of publication of application: **16.09.2015**
(21) Application number: 13852425.1
(22) Date of filing: 11.11.2013
(51) Int. Cl.: B62M 3/06, B62M 9/00, F16H 55/30

(54) **ASYMMETRIC ELLIPTICAL CHAINRING CAPABLE OF FINE-ANGLE VARIATION, AND CRANKSET OF BICYCLE COMPRISING SAME**

(30) Priority: 09.11.2012 KR 20120127420; 10.01.2013 KR 20130003428
(71) Applicant: Choi, Yun Seok, Daegu 701-862 (KR)
(72) Inventor: SEO, Tae Kwon, Daegu 702-832 (KR); PARK, Seong Ho, Daegu 701-767 (KR); HWANG, Chan Gyu, Gyeongsan-si Gyeongsangbuk-do 712-880 (KR); CHAE, Su Chang, Daegu 704-130 (KR); CHOI, Yun Seok, Daegu 701-862 (KR)
(74) Representative: Mittler, Enrico
(86) International application number: PCT/KR2013/010208
(87) International publication number: WO 2014/073933

(57) **Abstract**

Disclosed are an elliptical chainring capable of fine-angle variation, and a crankset of a bicycle comprising the same. The crankset of a bicycle according to the first embodiment of the present invention, comprises: a crank shaft; an asymmetric elliptical chainring which is fitted and fixed in the crank shaft, which has a plurality of first to fourth crank arm fixing holes formed at predetermined spaces, and which has a plurality of first fine-adjustment holes and plurality of second fine-adjustment holes formed on the top and bottom thereof; a first adaptor arranged on the top of the plurality of first to fourth crank arm fixing holes, the plurality of first fine-adjustment holes, and the plurality of second fine-adjustment holes of the asymmetric elliptical chainring so as to support the asymmetric elliptical chainring; a second adaptor arranged on the top of the fifth and sixth crank arm fixing holes and a plurality of third fine-adjustment holes of the first adaptor so as to support the first adaptor; a crank arm; and a plurality of chainring bolts selectively and respectively fixed in the plurality of first fine-adjustment holes and plurality of second adjustment holes. A worker may finely adjust the angle between the asymmetric elliptical chainring and the crank arm by changing the positions of the plurality of chainring bolts (Fig. 1).

## Description

### TECHNICAL FIELD

The present invention relates to an asymmetric elliptical chainring capable of fine-angle variation and a crankset of a bicycle including the same, and more particularly to an elliptical chainring capable of fine-angle variation, that is, capable of finely adjusting the angle between the asymmetric elliptical chainring and a crank arm according to user's needs, and a crankset of a bicycle including the same.

### BACKGROUND ART

A bicycle generally means a two-wheeled vehicle which moves by rotating the wheel with the power of man. A foot-stepping force of a person is transferred to the rear wheel via the pedal, crankset and chain, so that the rear wheel rotates and the bicycle moves forward.

Also, a handle for steering is installed on the top front of a frame constituting the skeleton of the bicycle and a saddle for riding is installed on the rear portion of the frame and has an adjustable height.

Recently, a mountain bike is widely spreading as a bicycle for unpaved roads. The wheel of the mountain bike has a diameter of between 20 and 27 inches less than that of the bicycle for paved roads and is 1.5 to 2.5 times thicker than that of the bicycle for paved roads. Also, the mountain bike provides a speed ratio (e.g., 21 stage speed change) which can be changed depending on driving conditions.

Once the chainring which is used in most bicycles is fixed to a crank arm, it is very difficult to change the angle between the chainring and the crank arm.

Meanwhile, in some products, a plurality of perforations may be formed in the body of the chainring for the adjustment of the angle between the chainring and the crank arm. However, so far, it is only allowed to adjust the angle by as much as 10 degree or so.

In a case where a bicycle rider wants to finely adjust the angle between the chainring and the crank arm, it is very difficult for the bicycle rider to adjust the angle through the existing products.

The reason is as follows. The diameter of the chainring bolt which fixes the crank arm to the chainring is 10 mm and the standard for bolt circle diameter (BCD) is selectively used among 104 mm, 110 mm and 130 mm. Therefore, when the plurality of only small perforations are formed simply in order to finely adjust the angle with a range less than 10 degrees, it is inevitable that a supporting force for the chainring is unstable. In particular, when the chainring has a symmetric elliptical shape, the output section of the chainring having the symmetric elliptical shape is notably lower than that of the chainring having an asymmetric elliptical shape. Therefore, an appropriate resistance section of a user cannot be provided only by the fine angle adjustment, so that there was no choice but to adjust the angle by a relatively large angle of 10 degree or so.

### DISCLOSURE

### Technical Problem

The objective of the present invention is to solve the above-described problems of the existing technology. The present invention provides an elliptical chainring capable of fine-angle variation and a crankset of a bicycle including the same, which allows a user to easily adjust the fine-angle variation between an asymmetric elliptical chainring and a crank arm according to user's needs in the crankset including the asymmetric elliptical chainring.

Another objective of the present invention is to provide an elliptical chainring capable of fine-angle variation and a crankset of a bicycle including the same, which can reduce the total manufacturing cost of the crankset because at least one kind of an adaptor which is overlapped on and supports an asymmetric elliptical chainring can be manufactured by a simple laser process.

Further another objective of the present invention is to provide an elliptical chainring capable of fine-angle variation and a crankset of a bicycle including the same, which allows the user to adjust a fine angle between an asymmetric elliptical chainring and a crank arm within a range between 0.5 and 5 degrees, thereby variously applying a use range of muscle of a bicycle rider.

### Technical Solution

The present invention is designed to accomplish the above objective. A crankset of a bicycle according to the first embodiment of the present invention includes: a crank shaft which is rotatably inserted into the lower bracket of a frame; an asymmetric elliptical chainring which is inserted and fixed to the crank shaft and comprises a plurality of first to fourth crank arm fixing holes formed at a regular interval and a plurality of first fine-adjustment holes and a plurality of second fine-adjustment holes formed on the top and bottom thereof; a first adaptor which is overlapped on the plurality of first to fourth crank arm fixing holes, the plurality of first fine-adjustment holes and the plurality of second fine-adjustment holes, all of which are formed in the asymmetric elliptical chainring, and supports the asymmetric elliptical chainring; a second adaptor which is disposed to be overlapped on fifth to sixth crank arm fixing holes and a plurality of third fine-adjustment holes, all of which are formed in the first adaptor, and supports the first adaptor; a crank arm which is coupled and fixed to both ends of the crank shaft and transfers a rotational driving force to the asymmetric elliptical chainring; and a plurality of chainring bolts which are selectively fixed to the plurality of first fine-adjustment holes and the plurality of second fine-adjustment holes respectively. An angle between the asymmetric elliptical chainring and the crank arm is finely adjusted by the change of the position of the plurality of the chainring bolts.

A crankset of a bicycle according to the second embodiment of the present invention includes: a crank shaft which is rotatably inserted into the lower bracket of a frame; an asymmetric elliptical chainring which is inserted and fixed to the crank shaft and comprises a plurality of eleventh to fifteenth crank arm fixing holes, a plurality of eighth fine-adjustment holes and a plurality of ninth fine-adjustment holes; a third adaptor which is disposed to be overlapped on the plurality of eleventh to fifteenth crank arm fixing holes, the plurality of eighth fine-adjustment holes and the plurality of ninth fine-adjustment holes, all of which are formed in the asymmetric elliptical chainring, and supports the asymmetric elliptical chainring; a crank arm which is coupled and fixed to both ends of the crank shaft and transfers a rotational driving force to the asymmetric elliptical chainring; a plurality of chainring bolts which are selectively fixed to a plurality of first fine-adjustment holes and a plurality of second fine-adjustment holes respectively. An angle between the asymmetric elliptical chainring and the crank arm is finely adjusted by the change of the position of the plurality of the chainring bolts.

A crankset of a bicycle according to the third embodiment of the present invention includes: a crank shaft which is rotatably inserted into the lower bracket of a frame; an asymmetric elliptical chainring which is inserted and fixed to the crank shaft and includes a plurality of twenty first to twenty fourth crank arm fixing holes and a twelfth fine-adjustment hole so as to make the angle variation of the asymmetric elliptical chainring; a fourth adaptor which is overlapped on the plurality of twenty first to twenty fourth crank arm fixing holes and the twelfth fine-adjustment hole, all of which are formed in the asymmetric elliptical chainring, and supports the asymmetric elliptical chainring; a crank arm which is coupled and fixed to both ends of the crank shaft and transfers a rotational driving force to the asymmetric elliptical chainring; and a plurality of chainring bolts which are selectively fixed to a plurality of first fine-adjustment holes and a plurality of second fine-adjustment holes respectively. An angle between the asymmetric elliptical chainring and the crank arm is finely adjusted by the change of the position of the plurality of the chainring bolts.

### Advantageous Effects

The above-described asymmetric elliptical chainring capable of fine-angle variation and a crankset of a bicycle including the same according to the embodiment of the present invention has the following advantages.

First, the user can easily adjust the fine-angle variation between the chainring and the crank arm according to user's needs in the crankset including the asymmetric elliptical chainring, so that it is possible to improve the driving power and driving efficiency of a bicycle and to improve the consistency of resistance of the human body.

Second, at least one kind of an adaptor which is overlapped on and supports the asymmetric elliptical chainring is manufactured by a simple laser process. Therefore, the total manufacturing cost of the crankset can be reduced.

Third, a fine angle between the asymmetric elliptical chainring and the crank arm can be adjusted, thereby variously applying a use range of muscle of a bicycle rider.

### BRIEF DESCRIPTION OF DRAWINGS

Figs. 1a to 1c are front views showing an asymmetric elliptical chainring, a first adaptor and a second adaptor according to a first embodiment of the present invention;
Figs. 2a to 2d are views showing an operation of a crankset which makes angle variation of the asymmetric elliptical chainring according to the first embodiment of the present invention;
Figs. 3a to 3b are front views showing an asymmetric elliptical chainring and a third adaptor according to a second embodiment of the present invention;
Figs. 4a to 4d are views showing an operation of a crankset which makes the angle variation of the asymmetric elliptical chainring according to the second embodiment of the present invention;
Figs. 5a to 5b are front views showing an asymmetric elliptical chainring and an adaptor according to a third embodiment of the present invention; and
Figs. 6a to 6c are views showing an operation of a crankset which makes the angle variation of the asymmetric elliptical chainring according to the third embodiment of the present invention.

### MODE FOR INVENTION

Hereafter, an embodiment of the present invention will be described in detail such that those skilled in the art to which the present invention belongs will embody the technical idea of the present invention with reference to the accompanying drawings. However, the present invention may be embodied in various forms and is not limited to the embodiment described in the present specification.

### <First Embodiment>

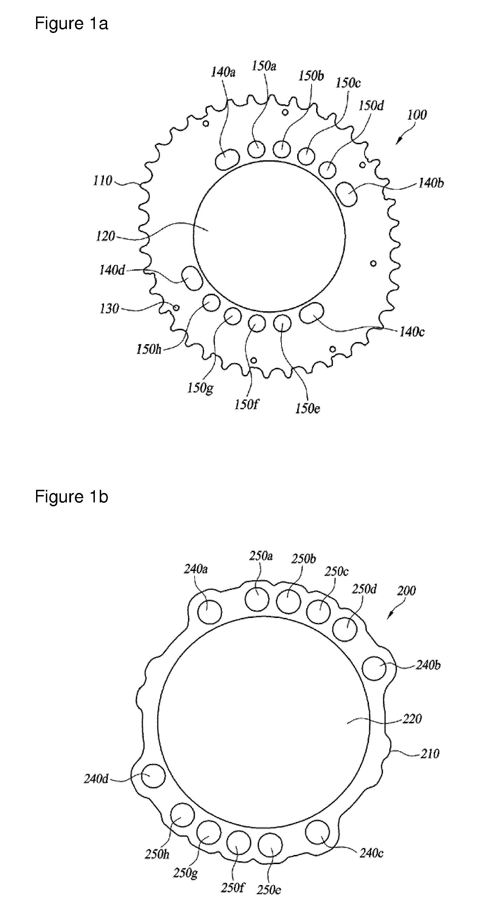

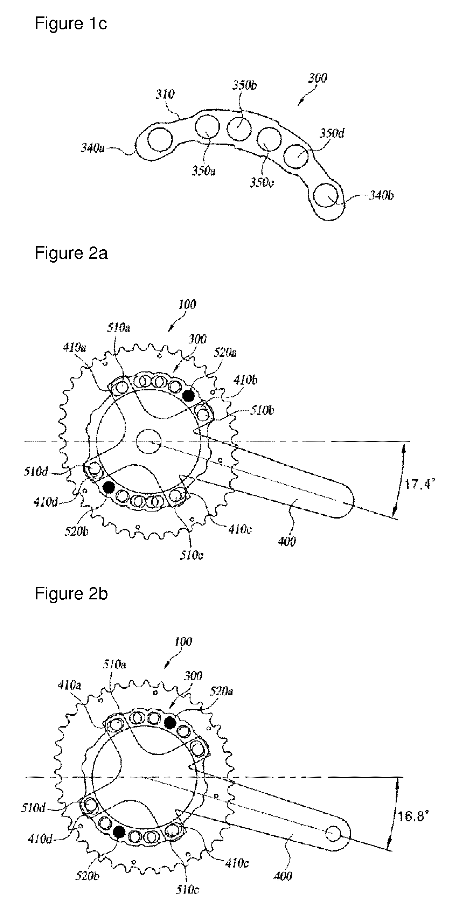

Figs. 1 a to 1c are front views showing an asymmetric elliptical chainring, a first adaptor and a second adaptor according to a first embodiment of the present invention.

In general, a chainring which transfers a force transferred through the pedal of a bicycle to the chain is fastened to a crank arm by means of bolts and nuts. Such a chainring perform a 360 degree rotation by the force transferred through the pedal and transfers the force to the chain engaged with the saw teeth, so that the rear wheel of the bicycle can be rotated.

Referring to Fig. 1a, an asymmetric elliptical chainring 100 according to the first embodiment of the present invention includes a plurality of saw teeth 110 which are formed to protrude along the outer circumferential surface of the asymmetric elliptical chainring 100 and move the chain, a first circular opening 120 which is formed at the inner central portion of the asymmetric elliptical chainring 100, a plurality of shift pins 130 which are formed adjacent to the saw teeth 110 and guide the chain when a user shifts the gear, a plurality of first to fourth crank arm fixing holes 140a, 140b, 140c and 140d which are formed adjacent to the first circular opening 120, a plurality of first fine-adjustment holes 150a,150b,150c and 150d which are formed to maintain a regular interval between the adjacent first and second crank arm fixing holes 140a and 140b, and a plurality of second fine-adjustment holes 150e,150f,150g and 150h which are formed to maintain a regular interval between the adjacent third and fourth crank arm fixing holes 140c and 140d.

Here, in the overall shape of the asymmetric elliptical chainring 100, as shown in Fig. 1a, the first opening 120 formed within the asymmetric elliptical chainring 100 has a circular shape, and the outside of the asymmetric elliptical chainring 100, which has the saw teeth 110 formed to protrude therefrom, has a shape in which a distance from the center of the first opening 120 to the outer circumferential surface is linearly increased or decreased (alias, a bulging head shape).

Also, a first adaptor 200 includes a body 210 which is disposed to be overlapped on the plurality of first to fourth crank arm fixing holes 140a, 140b, 140c and 140d, the plurality of first fine-adjustment holes 150a, 150b, 150c and 150d, and the plurality of second fine-adjustment holes 150e, 150f, 150g and 150h, all of which are formed in the asymmetric elliptical chainring 100, and supports the asymmetric elliptical chainring 100, and which is, as shown in Fig. 1b, formed to linearly include the external appearances of the plurality of first to fourth crank arm fixing holes 140a, 140b, 140c and 140d, the plurality of first fine-adjustment holes 150a, 150b, 150c and 150d, and the plurality of second fine-adjustment holes 150e, 150f, 150g and 150h, a second circular opening 220 which is formed at the inner central portion of the first adaptor 200 and has the same size as that of the first circular opening 120, a plurality of fifth to eighth crank arm fixing holes 240: 240a, 240b, 240c and 240d which are formed to have a size relatively smaller than that of the plurality of first to fourth crank arm fixing holes 140a, 140b, 140c and 140d formed in the asymmetric elliptical chainring 100, a plurality of third fine-adjustment holes 250a, 250b, 250c and 250d which are formed to have the same size as that of the plurality of first fine-adjustment holes 150a,150b,150c and 150d formed in the asymmetric elliptical chainring 100, and a plurality of fourth fine-adjustment holes 250e, 250f, 250g and 250h which are formed to have the same size as that of the plurality of second fine-adjustment holes 150e,150f,150g and 150h formed in the asymmetric elliptical chainring 100.

Also, a second adaptor 300 includes a body 310 which is disposed to be overlapped on the fifth to sixth crank arm fixing holes 240a and 240b and the plurality of third fine-adjustment holes 250a, 250b, 250c and 250d, all of which are formed in the first adaptor 200, and supports the first adaptor 200, and which is, as shown in Fig. 1c, formed to maintain a certain interval from the fifth to sixth crank arm fixing holes 240a and 240b and the plurality of third fine-adjustment holes 250a, 250b, 250c and 250d of the first adaptor 200, a plurality of ninth to tenth crank arm fixing holes 340a and 340b which are formed to have the same size as that of the fifth and sixth crank arm fixing holes 250a and 250b formed in the first adaptor 200, and a plurality of fifth fine-adjustment holes 350a, 350b, 350c and 350d which are formed to have the same size as that of the plurality of third fine-adjustment holes 250a, 250b, 250c and 250d formed in the first adaptor 200.

In the first embodiment of the present invention, when the first and second adaptors 200 and 300 are used in the form of a double layer on the asymmetric elliptical chainring 100, it is recommended that the thickness of the second adaptor 300 should be from 2 mm to 3 mm in order to prevent the chain from being caught between an inner chainring and an outer chainring when a bicycle rider shifts the gear of the bicycle.

Also, the plurality of first to fourth crank arm fixing holes 140a, 140b, 140c and 140d formed in the asymmetric elliptical chainring 100 is formed to have an elongated hole shape without a protrusion or a step difference so as to perform an angular motion at a certain angle. Meanwhile, the fifth to eighth crank arm fixing holes 240a, 240b, 240c and 240d formed in the first adaptor 200 and the ninth to tenth crank arm fixing holes 340a and 340b formed in the second adaptor 300 are formed to have a circular shape.

In the first embodiment of the present invention, the plurality of first fine-adjustment holes 150a, 150b, 150c and 150d and the plurality of second fine-adjustment holes 150e, 150f, 150g and 150h, all of which are formed in the asymmetric elliptical chainring 100, are formed symmetrically with each other with respect to the first opening 120. It is recommended that the angle between the asymmetric elliptical chainring 100 and a crank arm 400 should be adjusted within a range between 0.5 and 5 degrees.

Figs. 2a to 2d are views showing an operation of a crankset which makes angle variation of the asymmetric elliptical chainring according to the first embodiment of the present invention.

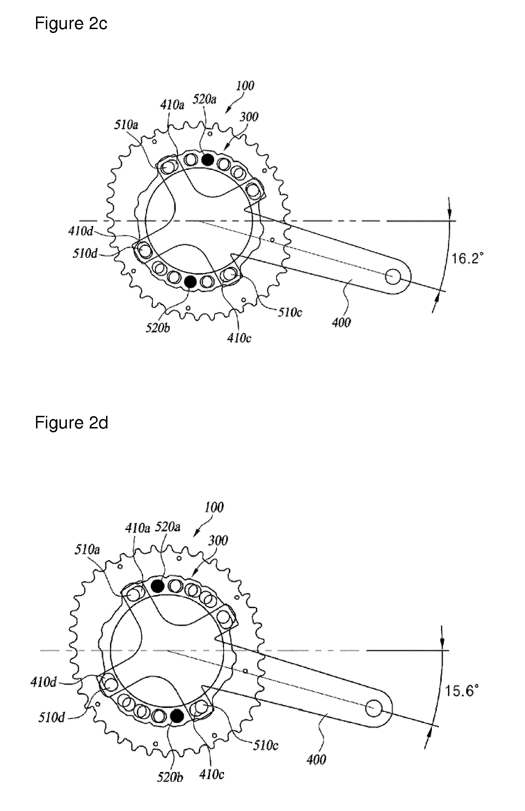

Referring to Figs. 1 and 2, the crankset of the bicycle according to the first embodiment of the present invention includes a crank shaft (not shown) which is rotatably inserted into the lower bracket of the frame; the asymmetric elliptical chainring 100 which is inserted and fixed to the crank shaft and includes the plurality of first to fourth crank arm fixing holes 140: 140a, 140b, 140c and 140d, the plurality of first fine-adjustment holes 150a,150b,150c and 150d, and the plurality of second fine-adjustment holes 150e,150f,150g and 150h, all of which are formed in the asymmetric elliptical chainring 100 so as to make the angle variation of the asymmetric elliptical chainring 100; the first adaptor 200 which is overlapped on the plurality of first to fourth crank arm fixing holes 140a, 140b, 140c and 140d, the plurality of first fine-adjustment holes 150a, 150b, 150c and 150d, and the plurality of second fine-adjustment holes 150e, 150f, 150g and 150h, all of which are formed in the asymmetric elliptical chainring 100, and supports the asymmetric elliptical chainring 100; the second adaptor 300 which is disposed to be overlapped on the fifth to sixth crank arm fixing holes 240a and 240b and the plurality of third fine-adjustment holes 250a, 250b, 250c and 250d, all of which are formed in the first adaptor 200, and supports the first adaptor 200; the crank arm 400 which is coupled and fixed to both ends of the crank shaft and transfers a rotational driving force to the asymmetric elliptical chainring 100; a pedal (not shown) which is rotatably coupled to the end of the crank arm 400; and a plurality of chainring bolts 520a and 520b which are selectively fixed to the plurality of first fine-adjustment holes 150a, 150b, 150c and 150d and the plurality of second fine-adjustment holes 150e, 150f, 150g and 150h respectively and finely adjust the angle between the asymmetric elliptical chainring 100 and the crank arm 400.

Here, the pedal is connected to one end of the crank arm 400 and a plurality of chainring fastening holes 410a to 410d are formed in the other end of the crank arm 400. In the first embodiment of the present invention, since the crank arm 400 has four feet, four chainring fastening holes 410a to 410d are formed in the other end of the crank arm 400 and chainring fastening bolts 510a to 510d are fastened to the chainring fastening holes 410a to 410d respectively.

In Fig. 2a, when the two chainring bolts 520a and 520b are respectively fastened to the two fine-adjustment holes 150d and 150h arranged opposite to each other, it is shown that the angle variation between the center of the asymmetric elliptical chainring 100 and the center of the crank arm 400 is 17.4 degrees. In Fig. 2b, when the two chainring bolts 520a and 520b are respectively fastened to the fine-adjustment holes 150c and 150g, it is shown that the angle variation between the center of the asymmetric elliptical chainring 100 and the center of the crank arm 400 is 16.8 degrees. When the two chainring bolts 520a and 520b are respectively fastened to the fine-adjustment holes 150b and 150f, it is shown that the angle variation between the center of the asymmetric elliptical chainring 100 and the center of the crank arm 400 is 16.2 degrees. When the two chainring bolts 520a and 520b are respectively fastened to the fine-adjustment holes 150a and 150e, it is shown that the angle variation between the center of the asymmetric elliptical chainring 100 and the center of the crank arm 400 is 15.6 degrees. That is, Figs. 2a and 2d show that the angle variation between the center of the asymmetric elliptical chainring 100 and the crank arm 400 is made within a range between 0.5 and 5 degrees with respect to the first adaptor 200.

### <Second Embodiment>

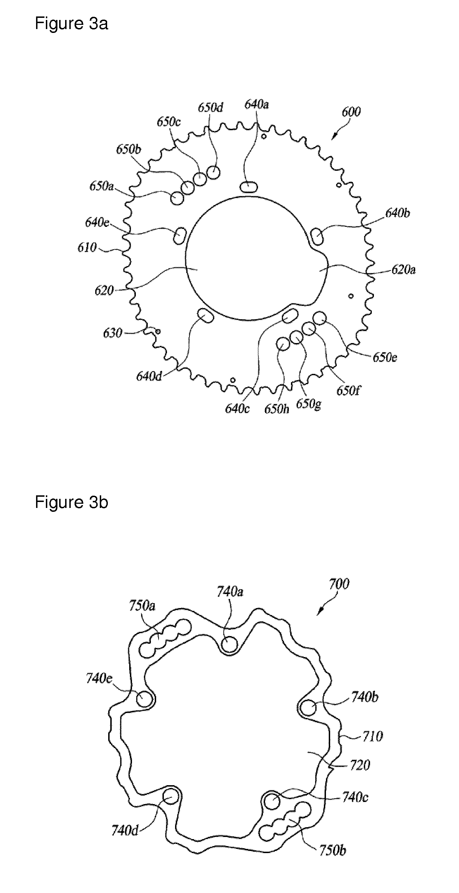

Figs. 3a and 3b are front views showing an asymmetric elliptical chainring and a third adaptor according to a second embodiment of the present invention.

First, referring to Fig.3a, the asymmetric elliptical chainring 600 according to the second embodiment of the present invention includes a plurality of saw teeth 610 which are formed to protrude along the outer circumferential surface of the asymmetric elliptical chainring 600 and move the chain, a third opening 620 which is formed to have a circular shape at the inner central portion of the asymmetric elliptical chainring 600 and has a horizontally protruding end portion of one side thereof, a plurality of shift pins 630 which are formed adjacent to the saw teeth 610 and guide the chain when the user shifts the gear, a plurality of eleventh to fifteenth crank arm fixing holes 640a, 640b, 640c, 640d and 640e which are formed adjacent to the third opening 620, a plurality of sixth fine-adjustment holes 650a, 650b, 650c and 650d which are formed at a regular interval between and outside any adjacent eleventh and fifteenth crank arm fixing holes 640a and 640e, and a plurality of seventh fine-adjustment holes 650e, 650f, 650g and 650h which are formed opposite to the plurality of sixth fine-adjustment holes 650a, 650b, 650c and 650d respectively.

Also, the third adaptor 700 includes a body 710 which is disposed to be overlapped on the plurality of eleventh to fifteenth crank arm fixing holes 640a, 640b, 640c, 640d and 640e, the plurality of eleventh fine-adjustment holes 650a, 650b, 650c and 650d and the plurality of seventh fine-adjustment holes 650e, 650f, 650g and 650h and supports the asymmetric elliptical chainring 600, and which is, as shown in Fig. 3b, formed to linearly include the plurality of eleventh to fifteenth crank arm fixing holes 640a, 640b, 640c, 640d and 640e, the plurality of eighth fine-adjustment holes 650a, 650b, 650c and 650d and the plurality of ninth fine-adjustment holes 650e, 650f, 650g and 650h, all of which are formed in the asymmetric elliptical chainring 600, a fourth opening 720 which is formed at the inner central portion of the third adaptor 700 and irregularly extends by a certain length while linearly avoiding the plurality of eleventh to fifteenth crank arm fixing holes 640a, 640b, 640c, 640d and 640e, a plurality of sixteenth to twentieth crank arm fixing holes 740a, 740b, 740c, 740d and 740e which are formed to have the same size as that of the plurality of eleventh to fifteenth crank arm fixing holes 640a, 640b, 640c, 640d and 640e formed in the asymmetric elliptical chainring 600, a tenth fine-adjustment hole 750a which is formed to receive the plurality of sixth fine-adjustment holes 650a, 650b, 650c and 650d formed in the asymmetric elliptical chainring 600, and an eleventh fine-adjustment hole 750b which is formed to receive the plurality of twelfth fine-adjustment holes 650e, 650f, 650g and 650h formed in the asymmetric elliptical chainring 600.

Here, it is recommended that the tenth fine-adjustment hole 750a and the eleventh fine-adjustment hole 750b should have one adjustment hole formed in such a manner as to overlap certain areas of four holes.

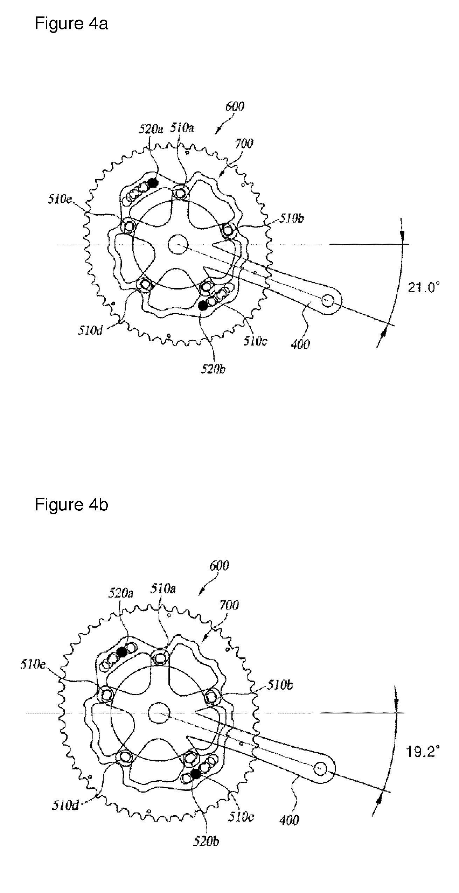

Figs. 4a to 4d are views showing an operation of the crankset which makes the angle variation of the asymmetric elliptical chainring according to the second embodiment of the present invention.

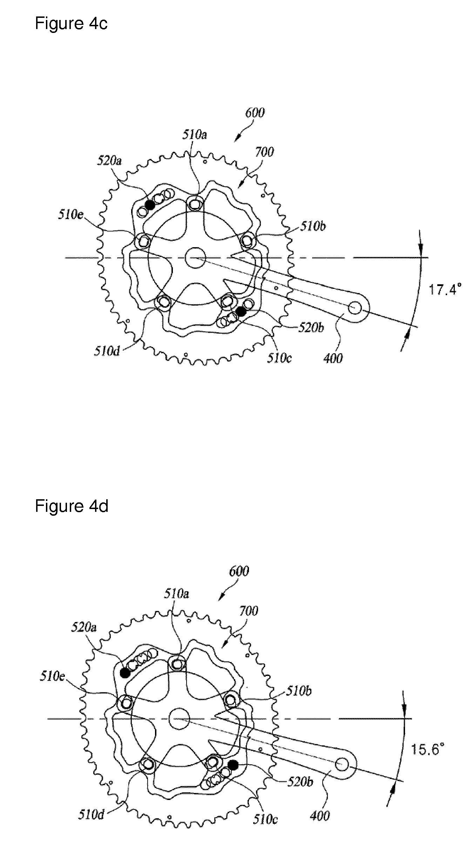

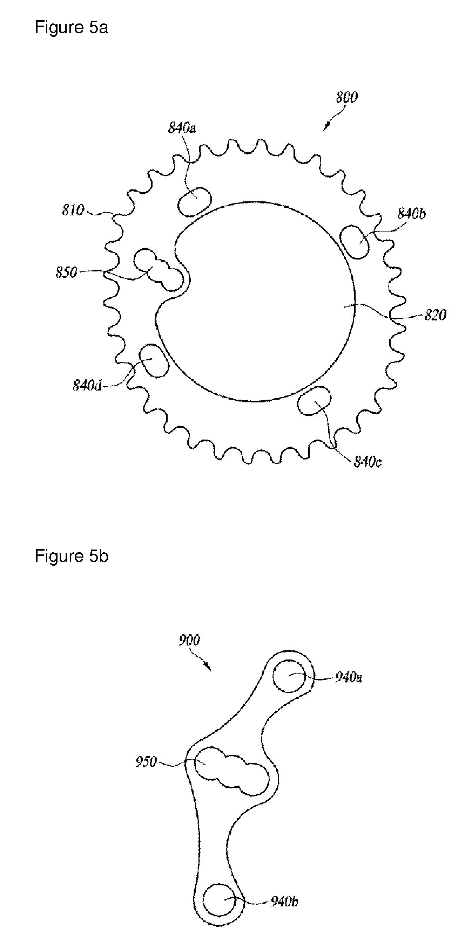

Referring to Figs. 4 and 5, the crankset of the bicycle according to the second embodiment of the present invention includes a crank shaft (not shown) which is rotatably inserted into the lower bracket of the frame; the asymmetric elliptical chainring 600 which is inserted and fixed to the crank shaft and includes the plurality of eleventh to fifteenth crank arm fixing holes 640a, 640b, 640c, 640d and 640e, the plurality of eighth fine-adjustment holes 650a, 650b, 650c and 650d and the plurality of ninth fine-adjustment holes 650e, 650f, 650g and 650h, so as to make the angle variation of the asymmetric elliptical chainring; the third adaptor 700 which is disposed to be overlapped on the plurality of eleventh to fifteenth crank arm fixing holes 640a, 640b, 640c, 640d and 640e, the plurality of eighth fine-adjustment holes 650a, 650b, 650c and 650d and the plurality of ninth fine-adjustment holes 650e, 650f, 650g and 650h, all of which are formed in the asymmetric elliptical chainring 600, and supports the asymmetric elliptical chainring 600; the crank arm 400 which is coupled and fixed to both ends of the crank shaft and transfers a rotational driving force to the asymmetric elliptical chainring 600; a pedal (not shown) which is rotatably coupled to the end of the crank arm 400; and the plurality of chainring bolts 520a and 520b which are selectively fixed to the plurality of eighth fine-adjustment holes 650a, 650b, 650c and 650d and the plurality of ninth fine-adjustment holes 650e, 650f, 650g and 650h, all of which are formed in the asymmetric elliptical chainring 600

Here, the pedal is connected to one end of the crank arm 400 and the plurality of chainring fastening holes 410a to 410d are formed in the other end of the crank arm 400. In the first embodiment of the present invention, since the crank arm 400 has four feet, the four chainring fastening holes 410a to 410d are formed and the chainring fastening bolts 510a to 510d are fastened to the chainring fastening holes 410a to 410d respectively.

In Fig. 4a, when the two chainring bolts 520a and 520b are respectively fastened to the fine-adjustment holes 650d and 650h, it is shown that the angle variation between the center of the asymmetric elliptical chainring 600 and the center of the crank arm 400 is 21.0 degrees. In Fig. 4b, when the two chainring bolts 520a and 520b are respectively fastened to the fine-adjustment holes 650c and 650g, it is shown that the angle variation between the center of the asymmetric elliptical chainring 600 and the center of the crank arm 400 is 19.2 degrees. When the two chainring bolts 520a and 520b are respectively fastened to the fine-adjustment holes 650b and 650f, it is shown that the angle variation between the center of the asymmetric elliptical chainring 600 and the center of the crank arm 400 is 17.4 degrees. When the two chainring bolts 520a and 520b are respectively fastened to the fine-adjustment holes 650a and 650e, it is shown that the angle variation between the center of the asymmetric elliptical chainring 600 and the center of the crank arm 400 is 15.6 degrees.

That is, like the first embodiment of the present invention shown in Figs. 2a to 2d, Figs. 4a and 4d show that the angle variation between the center of the asymmetric elliptical chainring 600 and the crank arm 400 is made within a range between 0.5 and 5 degrees with respect to the third adaptor 700.

### <Third Embodiment>

Figs. 5a and 5d are front views showing an asymmetric elliptical chainring and an adaptor according to a third embodiment of the present invention.

Referring to Fig. 5a, an asymmetric elliptical chainring 800 according to the third embodiment of the present invention includes a plurality of saw teeth 810 which are formed to protrude along the outer circumferential surface of the asymmetric elliptical chainring 800 and move the chain, a fifth opening 820 which is formed to have a circular shape at the inner central portion of the asymmetric elliptical chainring 800 and has a depressed portion thereof, a plurality of twenty first to twenty fourth crank arm fixing holes 840a, 840b, 840c and 840d which are formed adjacent to the fifth opening 820, and a twelfth fine-adjustment hole 850 which is formed to have a predetermined inclination at a portion protruding in such a manner as to depress the fifth opening 820.

Here, it is recommended that the twelfth fine-adjustment hole 850 should be one adjustment hole which is formed by outward overlapping certain areas of three holes within the asymmetric elliptical chainring 800 and has a predetermined inclination.

Also, a fourth adaptor 900 includes a body 910 which supports the twelfth fine-adjustment hole 850 formed in the asymmetric elliptical chainring 800 and the two crank arm fixing holes 840a and 840d formed symmetrically with each other in the asymmetric elliptical chainring 800, and which is, as shown in Fig. 5b, integrally formed to linearly include the plurality of crank arm fixing holes 840a and 840d formed in the asymmetric elliptical chainring 800 and the twelfth fine-adjustment hole 850 formed in the asymmetric elliptical chainring 800, a plurality of twenty fifth to twenty sixth crank arm fixing holes 940a and 940b which are formed to have the same size as that of the crank arm fixing holes 840a and 840d formed in the asymmetric elliptical chainring 800, and a thirteenth fine-adjustment hole 950 which is formed to have the same size as that of the twelfth fine-adjustment hole 850 formed in the asymmetric elliptical chainring 800.

Also, the crank arm fixing holes 840a and 840d formed in the asymmetric elliptical chainring 800 is formed to have an elongated hole shape without a protrusion or a step difference so as to perform an angular motion at a certain angle. Meanwhile, the twenty fifth to twenty sixth crank arm fixing holes 940a and 940b formed in the fourth adaptor 900 are formed to have a circular shape.

Also, it is recommended that the thirteenth fine-adjustment hole 950 formed in the fourth adaptor 900 should be formed in such a manner as to overlap certain areas of three circular holes and should be formed in a vertical direction to be inclined at a certain angle.

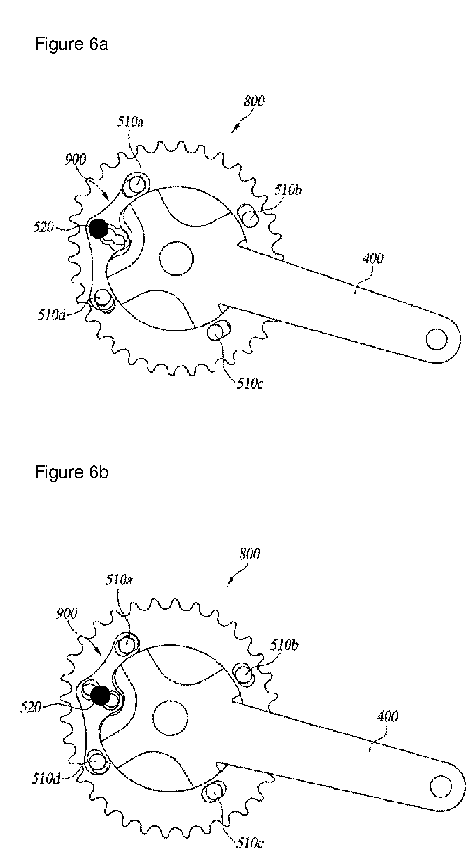

Figs. 6a to 6c are views showing an operation of the crankset which makes the angle variation of the asymmetric elliptical chainring according to the third embodiment of the present invention.

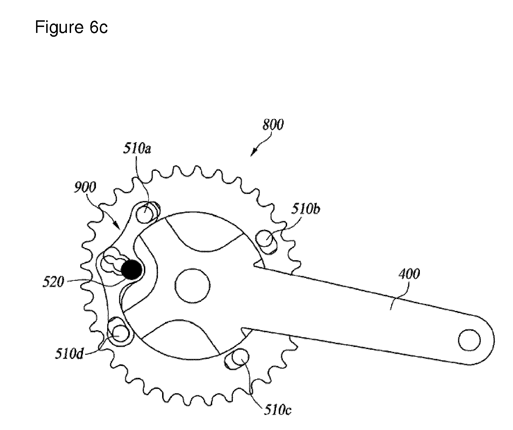

Referring to Figs. 5 and 6, the crankset of the bicycle according to the third embodiment of the present invention includes a crank shaft (not shown) which is rotatably inserted into the lower bracket of the frame; the asymmetric elliptical chainring 800 which is inserted and fixed to the crank shaft and includes the plurality of twenty first to twenty fourth crank arm fixing holes 840a, 840b, 840c and 840d and the twelfth fine-adjustment hole 850 so as to make the angle variation of the asymmetric elliptical chainring; the fourth adaptor 900 which is overlapped on the plurality of twenty first to twenty fourth crank arm fixing holes 840a, 840b, 840c and 840d and the twelfth fine-adjustment hole 850, all of which are formed in the asymmetric elliptical chainring 800, and supports the asymmetric elliptical chainring 800; the crank arm 400 which is coupled and fixed to both ends of the crank shaft and transfers a rotational driving force to the asymmetric elliptical chainring 800; a pedal (not shown) which is rotatably coupled to the end of the crank arm 400; and a chainring bolt 520 of which the position can be variably adjusted within the twenty first fine-adjustment hole 850 formed in the asymmetric elliptical chainring 800.

Here, the pedal is connected to one end of the crank arm 400 and the plurality of chainring fastening holes 410a to 410d are formed in the other end of the crank arm 400. In the third embodiment of the present invention, since the crank arm 400 has four feet, the four chainring fastening holes 410a to 410d are formed and the chainring fastening bolts 510a to 510d are fastened to the chainring fastening holes 410a to 410d respectively.

Fig. 6a shows that the chainring bolt 520 has been adjusted to be located on the top portion of the twelfth fine-adjustment hole 850. Fig. 6b shows that the chainring bolt 520 has been adjusted to be located on the middle portion of the twelfth fine-adjustment hole 850. Fig. 6c shows that the chainring bolt 520 has been adjusted to be located on the bottom portion of the twelfth fine-adjustment hole 850.

When a bicycle rider or a worker is able to finely adjust the angle between the asymmetric elliptical chainring 800 and the crank arm 400 by selectively moving the position of the chainring bolt 520 to the top, middle and bottom portions of the twelfth fine-adjustment hole 850.

That is, like the first embodiment of the present invention shown in Figs. 2a to 2d, Figs. 6a to 6c also show that the angle variation between the center of the asymmetric elliptical chainring 800 and the crank arm 400 is made within a range between 0.5 and 5 degrees with respect to the fourth adaptor 900.

According to the above-described first to third embodiments of the present invention, in consideration of a fact that the force that is applied to the pedal by human body is changed according to the positions of the chainring and crank, a distance between the crank shaft and the chain is increased in the interval during which the force that is applied to the pedal increases, so that the acceleration of the bicycle increases, and the distance between the crank shaft and the chain is decreased in the interval during which the force that is applied to the pedal decreases, so that the crank can be rotated even by a small force. Eventually, it is possible to finely adjust the angle variation in the elliptical chainring which improves the driving power and driving efficiency of the bicycle and improves the consistency of resistance of the human body.

## Claims

1. A crankset of a bicycle, the cransket comprising:
a crank shaft which is rotatably inserted into the lower bracket of a frame;
an asymmetric elliptical chainring which is inserted and fixed to the crank shaft and comprises a plurality of first to fourth crank arm fixing holes formed at a regular interval and a plurality of first fine-adjustment holes and a plurality of second fine-adjustment holes formed on the top and bottom thereof;
a first adaptor which is overlapped on the plurality of first to fourth crank arm fixing holes, the plurality of first fine-adjustment holes and the plurality of second fine-adjustment holes, all of which are formed in the asymmetric elliptical chainring, and supports the asymmetric elliptical chainring;
a second adaptor which is disposed to be overlapped on fifth to sixth crank arm fixing holes and a plurality of third fine-adjustment holes, all of which are formed in the first adaptor, and supports the first adaptor;
a crank arm which is coupled and fixed to both ends of the crank shaft and transfers a rotational driving force to the asymmetric elliptical chainring; and
a plurality of chainring bolts which are selectively fixed to the plurality of first fine-adjustment holes and the plurality of second fine-adjustment holes respectively,
wherein an angle between the asymmetric elliptical chainring and the crank arm is finely adjusted by the change of the position of the plurality of the chainring bolts.

2. The crankset of a bicycle of claim 1, wherein a first circular opening is formed within the asymmetric elliptical chainring and wherein an outside of the asymmetric elliptical chainring has a shape in which a distance from the center of the first opening to the outer circumferential surface thereof is linearly increased or decreased.

3. The crankset of a bicycle of claim 1, wherein the first adaptor comprises:
a second circular opening which is formed at the inner central portion thereof and has the same size as that of the first opening;
a plurality of fifth to eighth crank arm fixing holes which are formed to have a size relatively smaller than that of the plurality of first to fourth crank arm fixing holes formed in the asymmetric elliptical chainring; and
a plurality of third fine-adjustment holes which are formed to have the same size as that of the plurality of first fine-adjustment holes formed in the asymmetric elliptical chainring, and a plurality of fourth fine-adjustment holes which are formed to have the same size as that of the plurality of second fine-adjustment holes formed in the asymmetric elliptical chainring.

4. The crankset of a bicycle of claim 1, wherein the second adaptor comprises:
a plurality of ninth to tenth crank arm fixing holes which are formed to have the same size as that of the fifth and sixth crank arm fixing holes formed in the upper portion of the first adaptor; and
a plurality of fifth fine-adjustment holes which are formed to have the same size as that of the plurality of third fine-adjustment holes formed in the upper portion of the first adaptor.

5. The crankset of a bicycle of claim 1, wherein an angle variation between the center of the asymmetric elliptical chainring and the crank arm is made within a range between 0.5 and 5 degrees with respect to the first adaptor.

6. A crankset of a bicycle, the cransket comprising:
a crank shaft which is rotatably inserted into the lower bracket of a frame;
an asymmetric elliptical chainring which is inserted and fixed to the crank shaft and comprises a plurality of eleventh to fifteenth crank arm fixing holes, a plurality of eighth fine-adjustment holes and a plurality of ninth fine-adjustment holes;
a third adaptor which is disposed to be overlapped on the plurality of eleventh to fifteenth crank arm fixing holes, the plurality of eighth fine-adjustment holes and the plurality of ninth fine-adjustment holes, all of which are formed in the asymmetric elliptical chainring, and supports the asymmetric elliptical chainring;
a crank arm which is coupled and fixed to both ends of the crank shaft and transfers a rotational driving force to the asymmetric elliptical chainring;
a plurality of chainring bolts which are selectively fixed to a plurality of first fine-adjustment holes and a plurality of second fine-adjustment holes respectively,
wherein an angle between the asymmetric elliptical chainring and the crank arm is finely adjusted by the change of the position of the plurality of the chainring bolts.

7. The crankset of a bicycle of claim 6, wherein the asymmetric elliptical chainring comprises:
a third opening which is formed to have a circular shape at the inner central portion of the asymmetric elliptical chainring and has a horizontally protruding end portion of one side thereof;
the plurality of eleventh to fifteenth crank arm fixing holes which are formed adjacent to the third opening; and
the plurality of sixth fine-adjustment holes which are formed at a regular interval between and outside any adjacent eleventh and fifteenth crank arm fixing holes, and the plurality of seventh fine-adjustment holes which are formed opposite to the plurality of sixth fine-adjustment holes respectively.

8. The crankset of a bicycle of claim 6, wherein the third adaptor comprises:
a fourth opening which is formed at the inner central portion of the third adaptor and irregularly extends by a certain length while linearly avoiding the plurality of eleventh to fifteenth crank arm fixing holes;
a plurality of sixteenth to twentieth crank arm fixing holes which are formed to have the same size as that of the plurality of eleventh to fifteenth crank arm fixing holes formed in the asymmetric elliptical chainring; and
a tenth fine-adjustment hole which is formed to receive the plurality of sixth fine-adjustment holes formed in the asymmetric elliptical chainring, and an eleventh fine-adjustment hole which is formed to receive the plurality of seventh fine-adjustment holes formed in the asymmetric elliptical chainring.

9. The crankset of a bicycle of claim 8, wherein the tenth fine-adjustment hole and the eleventh fine-adjustment hole have one adjustment hole formed in such a manner as to overlap certain areas of a plurality of holes.

10. The crankset of a bicycle of claim 6, wherein an angle variation between the center of the asymmetric elliptical chainring and the crank arm is made within a range between 0.5 and 5 degrees with respect to the third adaptor.

11. A crankset of a bicycle, the cransket comprising:
a crank shaft which is rotatably inserted into the lower bracket of a frame;
an asymmetric elliptical chainring which is inserted and fixed to the crank shaft and includes a plurality of twenty first to twenty fourth crank arm fixing holes and a twelfth fine-adjustment hole so as to make the angle variation of the asymmetric elliptical chainring;
a fourth adaptor which is overlapped on the plurality of twenty first to twenty fourth crank arm fixing holes and the twelfth fine-adjustment hole, all of which are formed in the asymmetric elliptical chainring, and supports the asymmetric elliptical chainring;
a crank arm which is coupled and fixed to both ends of the crank shaft and transfers a rotational driving force to the asymmetric elliptical chainring; and
a plurality of chainring bolts which are selectively fixed to a plurality of first fine-adjustment holes and a plurality of second fine-adjustment holes respectively,
wherein an angle between the asymmetric elliptical chainring and the crank arm is finely adjusted by the change of the position of the plurality of the chainring bolts.

12. The crankset of a bicycle of claim 11, wherein the asymmetric elliptical chainring comprises:
a fifth opening which is formed to have a circular shape at the inner central portion of the asymmetric elliptical chainring and has a depressed portion thereof;
a plurality of twenty first to twenty fourth crank arm fixing holes which are formed adjacent to the fifth opening; and
a twelfth fine-adjustment hole which is formed to have a predetermined inclination at a portion protruding in such a manner as to depress the fifth opening.

13. The crankset of a bicycle of claim 11, wherein the fourth adaptor comprises:
a plurality of twenty fifth to twenty sixth crank arm fixing holes which are formed to have the same size as that of the crank arm fixing holes formed in the asymmetric elliptical chainring; and
a thirteenth fine-adjustment hole which is formed to have the same size as that of the twelfth fine-adjustment hole formed in the asymmetric elliptical chainring.

14. The crankset of a bicycle of claim 13, wherein the twelfth fine-adjustment hole is formed by outward overlapping certain areas of three holes within the asymmetric elliptical chainring and has a predetermined inclination.

15. The crankset of a bicycle of claim 11, wherein an angle variation between the center of the asymmetric elliptical chainring and the crank arm is made within a range between 0.5 and 5 degrees with respect to the fourth adaptor.
